# EUROPÄISCHE PATENTSCHRIFT

(11) **EP 4 631 126 B1**
(45) Veröffentlichungstag und Bekanntmachung des Hinweises auf die Patenterteilung: **05.08.2026**
(21) Anmeldenummer: 23817066.6
(22) Anmeldetag: 29.11.2023
(51) Int. Cl.: H01M 10/058, H01M 10/6557

(54) **ENERGIESPEICHERVORRICHTUNG FÜR EIN KRAFTFAHRZEUG**
ENERGY STORAGE DEVICE FOR VEHICLE
DISPOSITIF DE STOCKAGE D'ÉNERGIE POUR VÉHICULE

(30) Priorität: 07.12.2022 DE 102022132438
(43) Veröffentlichungstag der Anmeldung: 15.10.2025
(73) Patentinhaber: Bayerische Motoren Werke Aktiengesellschaft, 80809 München (DE)
(72) Erfinder: RUCKER, Andreas, 86161 Augsburg (DE)
(86) Internationale Anmeldenummer: PCT/EP2023/083501
(87) Internationale Veröffentlichungsnummer: WO 2024/120921

(56) Entgegenhaltungen:
- DE-A1- 102013 021 205
- DE-A1- 102019 212 861
- US-A1- 2021 167 444

## Beschreibung

Die Erfindung betrifft ein Verfahren zum Herstellen einer Energiespeichervorrichtung für ein Kraftfahrzeug, sowie eine mit diesem Verfahren hergestellte Energiespeichervorrichtung. Aus der DE 10 2020 119 450 A1 ist ein Batteriemodul mit Kondensat- und Propagationsschutz sowie eine Traktionsbatterie mit einem solchen Batteriemodul sowie elektrifiziertes Kraftfahrzeug mit einer solchen Traktionsbatterie bekannt.

Aus der US 2021/167444 A1 ist eine wiederaufladbare Batterie mit mehreren zylindrischen Zellen zur Speicherung elektrischer Energie und mindestens einer Kühlvorrichtung zur Kühlung oder Temperaturregelung der Zellen bekannt.

Aus der DE 10 2019 212861 A1 ist ein Batteriemodul für ein Kraftfahrzeug, ein Herstellungsverfahren für ein Batteriemodul und ein Kraftfahrzeug mit einem solchen Batteriemodul bekannt.

Aus der DE 10 2013 021205 A1 ist einen Zellblock für eine Batterie, welcher zumindest eine Anzahl von elektrisch seriell und/oder parallel miteinander verschalteten Einzelzellen und eine Temperierungsvorrichtung zur Temperierung der Einzelzellen umfasst bekannt.

Nachfolgend ist die Erfindung anhand einer Energiespeichervorrichtung, welche als Traktionsbatterie für ein elektrifiziertes Kraftfahrzeug ausgebildet ist, erläutert, dies ist nicht als eine Einschränkung der Erfindung auf eine derartige Anwendung zu verstehen. Die Traktionsbatterie ist bei einem elektrifizierten Kraftfahrzeug - eine entsprechende elektrische Reichweit vorausgesetzt - ein erheblicher Kostentreiber, so dass eine kostengünstige Herstellung dieser Energiespeichervorrichtung vorteilhaft ist. Weiter weist eine solche Energiespeichervorrichtung, verglichen mit anderen Komponenten des elektrifizierten Kraftfahrzeugs, ein relativ hohes Gewicht auf.

Die Energiespeichervorrichtung weist neben Bauteilen zur Speicherung der Energie in chemisch gebundener Form, sogenannte Energiespeicherzellen, weitere Bauteile auf, insbesondere zur Temperierung dieser Energiespeicherzellen. An der Funktion der Temperierung, beziehungsweise der Herstellung der Struktur zum Bereitstellen dieser Funktion, setzt die vorliegende Erfindung an. Es ist bekannt, einen Temperierkanal, also ein Bauteil zum Führen eines Temperiermediums zum Erwärmen oder Kühlen von Energiespeicherzellen, als "starres" Bauteil in einer solchen Energiespeichervorrichtung auszubilden, dabei ist unter einem solchen starren Bauteil ein metallisches Bauteil oder ein Kunststoffbauteil zu verstehen, welches dazu eingerichtet ist, weder bei der Herstellung der Energiespeichervorrichtung noch beim planmäßigen Betrieb dieser seine Form wesentlich zu verändern. Der Temperierkanal kann also durch eine sogenannte Kühlschlange gebildet werden, welche durch ein formgebendes Verfahren vor dem Einsetzten der Kühlschlage in die Energiespeichervorrichtung in seine Form gebracht wird. Die so geformte Kühlschlange wird dann als starres Bauteil in die Energiespeichervorrichtung eingesetzt, die zur Temperierung verwendeten starren Bauteile, weisen somit ein hohes Gewicht auf, weiter müssen die einzelnen Komponenten, insbesondere die Komponenten des sogenannten Energiespeichermoduls (Energiespeicherzellen und Komponenten zu deren Kühlung) besonders maßhaltig sein, da es aufgrund der Vielzahl von Komponenten zu Abweichungen in den geometrischen Erstreckungen des Energiespeichermoduls kommen.

Vor diesem Hintergrund ist es eine Aufgabe der Erfindung, ein Verfahren zum Herstellen einer verbesserten Energiespeichervorrichtung anzugeben, diese Aufgabe wird durch ein Verfahren gemäß dem ersten Patentanspruch, sowie durch eine Energiespeichervorrichtung, welche mit diesem Verfahren hergestellt ist gemäß Patentanspruch 6 gelöst. Zu bevorzugende Weiterbildungen der Erfindung sind jeweils Gegenstand der abhängigen Patentansprüche.

Die Erfindung schlägt ein Verfahren zum Herstellen einer Energiespeichervorrichtung vor, wobei die Energiespeichervorrichtung eine Vielzahl von Energiespeicherzellen aufweist. Im Sinn der Erfindung ist unter einer Energiespeichervorrichtung eine Vorrichtung zum Aufnehmen und Abgeben von elektrischer Leistung in Form von Strom und Spannung, sowie zum Abspeichern dieser elektrischen Leistung in Form von chemischer gebundener Energie zu verstehen, dabei kann eine solche Vorrichtung auch als eine sogenannte Sekundärbatterie verstanden werden. Vorzugsweise ist eine solche Energiespeichervorrichtung als eine sogenannte Traktionsbatterie für ein elektrifiziertes Kraftfahrzeug ausgebildet, welche ein Energiespeichermodul mit Energiespeicherzellen und mit einer Temperiereinrichtung zum Kühlen und/oder Erwärmen dieser Energiespeicherzellen aufweist, und mit einer Energiespeichergehäuseeinrichtung zum Aufnehmen dieses Energiespeichermoduls. Weiter vorzugsweise sind diese Energiespeicherzellen der Energiespeichervorrichtung als Batteriespeicherzellen ausgebildet, bei deren Ent- bzw. Aufladung Abwärme entstehen kann und weiter vorzugsweise sind diese Energiespeicherzellen als sogenannte Rundzellen ausgebildet. Insbesondere weist eine derartige Rundzelle eine im Wesentlichen kreisrunde Querschnittsfläche auf und bezüglich ihres chemischen Aufbaus kann eine solche Energiespeicherzelle als Lithiumionen-Speicherzelle ausgebildet sein. Die Energiespeicherzellen sind in der planmäßigen Einbaulage der Energiespeichervorrichtung vorzugsweise stehend ausgerichtet, so dass eine Zylinderachse einer solchen Energiespeicherzelle, bzw. sämtliche Energiespeicherzellen in der Energiespeichervorrichtung, in der planmäßigen Einbaulage vertikal ausgerichtet sind. Weiter vorzugsweise können derartige Energiespeicherzellen auch liegend und damit bezüglich deren Zylinderachse horizontal ausgerichtet sein. Weiter vorzugsweise sind die Energiespeicherzellen in mehreren Reihen nebeneinander oder insbesondere bei einer horizontalen Ausrichtung übereinander, in einer Energiespeichergehäuseeinrichtung angeordnet.

Im Sinn der Erfindung ist unter einer solchen Energiespeichergehäuseeinrichtung eine Einrichtung zu verstehen, welche diese Vielzahl von Energiespeicherzellen wenigstens teilweise, vorzugsweise aber vollständig, umgibt und weiter vorzugsweise dazu eingerichtet ist, die Energiespeichervorrichtung und damit die Vielzahl von Energiespeicherzellen, insbesondere in einem Kraftfahrzeug, zu positionieren und weiter die Energiespeicherzellen vor äußeren Einflüssen zu schützen. Bildlich gesprochen kann die Energiespeichergehäuseeinrichtung als ein Batteriegehäuse aufgefasst werden.

Wie oben ausgeführt ist die Vielzahl von Energiespeicherzellen derart in der Energiespeichergehäuseeinrichtung aufgenommen, dass sich Energiespeicherzellreihen ergeben. Vorzugsweise sind wenigstens zwei Energiespeicherzellreihen in der Energiespeichergehäuseeinrichtung benachbart zueinander angeordnet, sodass sich die einzelnen Energiespeicherzellen der beiden Energiespeicherzellreihen nicht kontaktieren, vielmehr ist zwischen diesen zwei Energiespeicherzellreihen ein sogenannter Temperierbereich gebildet. Ein solcher Temperierbereich kann geometrisch insbesondere als der Zwischenraum zwischen zwei benachbarten Energiespeicherzellreihen aufgefasst werden. Funktional ausgedrückt, kann in diesen Temperierbereich eine Einrichtung angeordnet werden, mittels welcher den Energiespeicherzellen der beiden Energiespeicherzellreihen Wärme entzogen werden kann (Kühlung) oder mit welchen diesen Energiespeicherzellen vorzugsweise auch Wärme zugeführt werden kann (Erwärmung), insbesondere geschieht diese Erwärmung oder Kühlung in einer Art, dass diese Energiespeicherzellen in einem vorgegebenen Temperaturfenster betreibbar sind. Insbesondere ist geometrisch zwischen zwei benachbarten Energiespeicherzellreihen ein Temperierkanal angeordnet, welcher Bestandteil einer sogenannten Energiespeichertemperiereinrichtung ist. In einer bevorzugten Ausführungsform ist damit eine Energiepeichermodul derart aufgebaut, dass bei einem Aneinanderreihen von Energiespeicherzellen in der Energiespeicherzellreihe in Längsrichtung, sich in einer Breitenrichtung des Energiespeichermoduls jeweils eine Energiespeicherzellreihe und ein Temperierkanal abwechseln. In einer weiter bevorzugten Ausführungsform sind jeweils zwei Energiespeicherzellreihen in dieser Breitenrichtung unmittelbar zueinander benachbart angeordnet und dann ist unmittelbar benachbart, beziehungsweise kontaktierend zu wenigstens einer dieser Energiespeicherzellreihen, ein Temperierkanal angeordnet, weiter vorzugsweise ergibt sich für diese Ausführungsform in der Breitenrichtung damit eine Anordnung, in welcher ein Temperierkanal, dann zwei Energiespeicherzellreihen und dann wieder ein Temperierkanal usw. angeordnet sind.

Im Sinn der Erfindung ist unter einer solchen Energiespeichertemperiereinrichtung also eine Einrichtung zum Kühlen, Erwärmen oder zum Kühlen und Erwärmen der Energiespeicherzellen in der Energiespeichergehäuseeinrichtung zu verstehen und insbesondere zu diesem Zweck weist die Energiespeichertemperiereinrichtung wenigstens einen Temperierkanal auf. Eine solcher Temperierkanal ist insbesondere also als ein Kanal zum Führen eines, vorzugsweise flüssigen, Temperiermediums, wobei dieses Temperiermedium zum Aufnehmen oder Abgeben von Wärme an diese Energiespeicherzellen in der oder den zu diesem Temperierkanal benachbarten Energiespeicherzellreihen eingerichtet. Weiter vorzugsweise ist die Energiespeichervorrichtung mit einer Vielzahl von Temperierkanälen versehen, wobei vorzugsweise ein solcher Temperierkanal von jeweils zwei Energiespeicherzellreihen benachbart ist und weiter vorzugsweise kontaktiert dieser eine solche Temperierkanal die zu ihm benachbart angeordneten Energiespeicherzellreihen wenigstens abschnittsweise, so dass insbesondere eine gute Wärmeleitung und ein geringer Bauraumbedarf erreichbar ist.

Vor diesem Hintergrund schlägt die Erfindung ein Verfahren zum Herstellen einer Energiespeichervorrichtung vor, wobei durch dieses Verfahren eine Energiespeichervorrichtung mit Eigenschaften herstellbar ist, welche gegenüber aus dem Stand der Technik bekannten Energiespeichervorrichtungen, verbessert sind, insbesondere ist eine Energiespeichervorrichtung mit hoher Maßhaltigkeit und gutem Wärmeübertrag bezüglich der Energiespeichertemperiereinrichtung erreichbar. Insbesondere um eine solche verbesserte Energiespeichervorrichtung herzustellen, weist das vorgeschlagene Verfahren folgende Schritte auf:
- Anordnen der Vielzahl von Energiespeicherzellen in wenigstens zwei, vorzugsweise aber in mehreren, Energiespeicherzellreihen insbesondere in der Energiespeichergehäuseeinrichtung, wobei in einer solchen Energiespeicherzellreihe mehrere Energiespeicherzellen in einer Längsrichtung hintereinander angeordnet sind. Vorzugsweise werden in einer solchen Energiespeicherzellreihe also wenigstens zwei, vorzugsweise aber mehrere Energiespeicherzellen hintereinander, also in dieser Längsrichtung angeordnet. Weiter vorzugsweise sind die Energiespeicherzellreihen in einer Breitenrichtung beabstandet zueinander angeordnet. Insbesondere dadurch, dass jeweils zwei Energiespeicherzellreihen beabstandet zueinander, also geometrisch getrennt durch den Temperierbereich, angeordnet sind, können dies Energiespeicherzellreihen präzise in der Energiespeichergehäuseeinrichtung angeordnet werden. Im Vergleich zu einer Einrichtung mit einem als starres Bauteil ausgebildeten Temperierkanalrohr, wie dieses aus dem Stand der Technik bekannt ist, und bei welcher das Temperierkanalrohr die beiden Energiespeicherzellreihen, insbesondere zum Wärmeübertrag, unmittelbar kontaktiert, addieren sich unvermeidbare Fertigungsabweichungen zu einer geometrischen Gesamtabweichung, insbesondere in dieser Breitenrichtung. Im Gegensatz dazu werden bei der vorgeschlagenen Art der Fertigung die Energiespeicherzellreihen zunächst unabhängig von einem Kühlkanal und damit präzise positioniert, insbesondere im Energiespeicherzellgehäuse positioniert.

Weiter wird bei dem vorgeschalgenen Herstellverfahren ein flexibler Temperierkanalschlauch in den Bereich zwischen den zwei benachbarten Energiespeicherzellreihen, also in diesem Temperierbereich, angeordnet. Dabei ist die Flexibilität des Temperierkanalschlauchs derart gewählt, dass dieser beim Einbringen in den Temperierbereich nicht seine endgültige Form aufweist, sogenannter ungedehnter Zustand, sondern diese endgültige Form erst in einem nachgelagerten Herstellungsschritt erhält, sogenannter gedehnter Zustand. Vorzugsweise wird in mehreren Temperierbereichen der Energiespeichervorrichtung und bevorzugt in allen Temperierbereichen jeweils ein solcher Temperierkanalschlauch angeordnet und weiter kann ein einziger solcher Temperierkanalschlauch auch durch mehrere oder alle solche Temperierbereiche geführt sein. Vorzugsweise ist der Temperierkanalschlauch, wenigstens im Wesentlichen, aus einem dehnbaren Kunststoffmaterial ausgebildet. Insbesondere durch das Einbringen des flexiblen Temperierkanalschlauchs bleibt die präzise Positionierung der Energiespicherzellreihen erhalten.

Nach dem Einbringen dieses wenigstens einen Temperierkanalschlauchs, wird auf diesen ein Überdruck aufgebracht, der sogenannte Temperierkanalüberdruck, wobei sich Überdruck auf ein Druckverhältnis zwischen einem Innenvolumen des Temperierkanalschlauchs und eine diesen unmittelbar umgebende Umwelt bezieht, vereinfacht ausgedrückt also ein Druckverhältnis zwischen innerhalb und außerhalb des Temperierkanalschlauchs. Weiter ist dieser Temperierkanalschlauch derart gewählt, dass dieser zum Ausformen des Temperierkanalschlauchs führt, also zu einer Volumenvergrößerung des Temperierkanalschlauchs und vorzugsweise wird der Temperierkanalschlauch zumindest soweit ausgeformt, beziehungsweise dessen Volumen vergrößert, bist dieser die zwei benachbarten Energiespeicherzellreihen, wenigstens abschnittsweise oder vorzugsweise vollständig, kontaktiert und damit den Temperierbereich, wenigstens im Wesentlichen, ausfüllt. Vorzugsweise vergrößert der Tempereierkanalschlauch unter Einwirkung des Temperierklanalüberdrucks sein Volumen um mehr als 5%, vorzugsweise um mehr als 15% und bevorzugt um mehr als 30% und weiter vorzugsweise ist der Temperierkanalüberdruck geringer als 50 bar, vorzugsweise geringer als 10 bar und weiter vorzugsweise geringer als 5 bar. Insbesondere durch die Elastizität des Temperierkanalschlauchs kann dieser vorzugsweise vollständig, wenigstens aber teilweise, an die Energiespeicherzellreihen angelegt werden und so entsteht eine besonders große Kontaktfläche zwischen der maßgebenden Oberfläche der Temperiereinrichtung und diesen Energiespeicherzellen der Energiespeicherzellreihen.

Weiter ist es vorgeschlagen, dass nach dem Einbringen den Temperierkanalschlauchs und vorzugsweise auch nach dem Aufbringen des Temperierkanalüberdrucks eine Energiespeicherfüllmasse in die Energiespeichergehäuseeinrichtung eingebracht wird, wobei die Energiespeicherfüllmasse damit den Temperierkanal wenigstens teilweise oder vollständig umgibt, so dass dieser Temperierkanal wenigstens teilweise oder vollständig in der Energiespeicherfüllmasse aufgenommen ist. Weiter vorzugsweise wird die Energiespeicherfüllmasse in flüssiger Form in die Energiespeichergehäuseeinrichtung eingebracht. Weiter vorzugsweise wird die Energiespeicherfüllmasse in eine schaumartige Konsistenz versetzt oder bevorzugt als Schaum in die Energiespeichergehäuseeinrichtung eingebracht. Weiter vorzugsweise bildet die Energiespeicherfüllmasse mit dem Temperierkanalschlauch, insbesondere in dessen aufgedehnten Zustand, wenigstens abschnittsweise, eine stoffschlüssige Verbindung aus und besonders bevorzugt hält die Energiespeicherfüllmasse den wenigstens einen Temperierkanalschlauch nach deren Verfestigung in der Form, welche der Temperierkanalschlauch im gedehnten Zustand eingenommen hat.

In einer bevorzugten Ausführungsform führt der wenigstens eine Temperierkanalschlauch aus dem Temperierbereich hinaus, vorzugsweise führt der Temperierkanalschlauch so in einen sogenannten Sammelbereich. Insbesondere ist in diesem Bereich, welcher vorzugsweise noch innerhalb der Energiespeichergehäuseeinrichtung liegt, der Temperierkanalschlauch nur einseitig oder gar nicht von wenigstens einer Energiespeicherzellreihe benachbart. Weiter vorzugsweise werden mehrere Temperierkanalschläuche in diesem Bereich durch ein starres Bauteil, sogenanntes Sammelrohr und weiter vorzugsweise durch wenigstens einen Temperierkanalsammelschlauch, welcher flexibel ausgeführt ist wie ein solcher Temperierkanalschlauch, fluidleitend miteinander verbunden. Vorzugsweise erstreckt sich der Sammelbereich, wenigstens im Wesentlichen in der Breitenrichtung des Energiespeichermoduls. Insbesondere mittels einer solchen Ausgestaltung der Erfindung ist es ermöglicht, auch den Anschluss der Temperiereinrichtung mit dem flexiblen und damit einfach herzustellenden Temperierkanalschlauch oder einem starren Kunststoffbauteil darzustellen.

In einer bevorzugt Ausführungsform ist der Temperierkanalschlauch, wenigstens im Temperierbereich, bei aufgebrachten Temperierkanalüberdruck um mehr als 5% gegenüber einem Zustand aufgedehnt, in welchem dieser Temperierkanalüberdruck nicht aufgebracht ist. Vorzugsweise bezieht sich diese Dehnung auf das Volumen, welches der Tempereirkanalschlauch im ungedehnten Zustand einnimmt (ungedeht: kein Temperierkanalüberdruck aufgebracht / gedehnt: Temperierkanalüberdruck aufgebracht). Insbesondere mittels einer solchen Dehnung ist es ermöglicht, den Temperierkanal im ungedehnten Zustand besonders einfach in den Temperierbereich einzubringen, da dieser einen wesentlich geringeren Raum einnimmt als in seinem gedehnten Zustand, weiter ist es durch eine "große" Dehnung ermöglicht, eine gute Kontaktierung der Energiespeicherzellen in den Energiespeicherzellreihen mit der Emergiespeichertemperiereinrichtung zu erreichen.

In einer bevorzugt Ausführungsform der Erfindung sind die Energiespeicherfüllmasse und der Temperierkanalschlauch derart aufeinander abgestimmt, dass die Energiespeicherfüllmassen mit dem Temperierkanalschlauch, wenigstens im Temperierbereich und wenigstens abschnittsweise, eine stoffschlüssige Verbindung ausbildet, insbesondere wenn die Energiespeicherfüllmasse sich teilweise oder vollständig verfestigt hat. Weiter vorzugsweise wird die Energiespeicherfüllmasse nach deren Einbringen ausgehärtet, insbesondere wenn diese den Temperierkanalschlauch wenigstens abschnittsweise umgeben hat. Insbesondere durch die stoffschlüssige Verbindung der Energiepeicherfüllmasse mit dem Temperierkanalschlauch und der Aushärtung dieser, wird der Temperierkanalschlauch durch die Energiespeicherfüllmasse, wenigstens weitgehend, dauerhaft in dessen gedehnten Zustand gehalten, so dass somit der Temperierkanal passgenau in den Temperierbereich eingebracht ist.

In einer bevorzugten Ausführungsform der Erfindung kontaktiert der Temperierkanalschlauch, insbesondere nach dem Aufbringen des Temperierkanalüberdrucks, wenigstens eine Energiespeicherzelle, vorzugsweise mehrere oder bevorzugt sämtliche Energiespeierzellen in einer Energiespeicherzellreihe und weiter vorzugsweise handelt es sich dabei um eine flächige Kontaktierung. Bildlich gesprochen schmiegt sich der elastische Temperierkanal, insbesondere unter Einfluss des Temperierkanalüberdrucks, an die in den Energiespeicherzellreihen gruppierten Energiespeicherzellen und kontaktiert diese dabei flächig. Insbesondere durch eine solche flächige Kontaktierung ist eine große Kontaktfläche erreichbar, insbesondere in Zusammenhang mit zylindrischen Energiespeicherzellen, und so ist ein guter Wärmeübertrag auf die Temperiereinrichtung ermöglicht.

Weiter schlägt die Erfindung eine Energiespeichervorrichtung für ein Kraftfahrzeug und vorzugsweise eine Kraftfahrzeugenergiespeichervorrichtung, vorzugsweise eine Kraftfahrzeug-Traktionsbatterie vor, wobei diese Energiespeichervorrichtung nach einem Verfahren der zuvor erläuterten Ansprüche hergestellt ist.

Nachfolgend ist die Erfindung anhand der wenigstens teilweise schematisierten Figuren, welche einzelne Merkmale und Kombinationen von Merkmalen zeigen näher erläutert, es wird darauf hingewiesen, dass die Erfindung auch durch andere als die dargestellten Kombinationen von Merkmalen zu realisieren ist, es zeigt:
- Fig. 1:: schematisierte Schnittdarstellung in einer Draufsicht von drei Energiespeicherzellreihen mit zwei ungedehnten Temperierkanalschläuchen,
- Fig. 2:: schematisierte Schnittdarstellung in einer Draufsicht von drei Energiespeicherzellreihen mit zwei gedehnten Temperierkanalschläuchen,
- Fig. 3:: schematisierter Ablaufplan des vorgeschlagenen Herstellverfahrens.

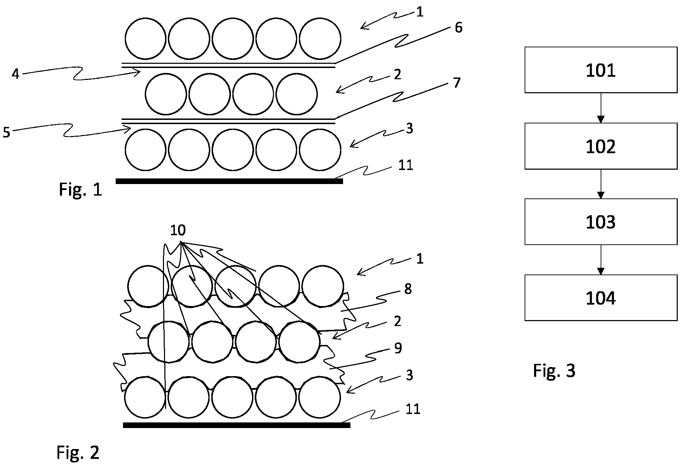

Figur 1 zeigt eine Draufsicht auf eine Schnittdarstellung eines Teils einer Energiespeichervorrichtung, insbesondere eines Energiespeichermoduls, dabei ist eine erste 1, zweite 2 und eine dritte 3 Energiespeicherzellreihe erkennbar. Diese Energiespeicherzellreihen 1, 2, 3 werden durch das Aneinanderreihen von zylindrischen Energiespeicherzellen in der Energiespeichergehäuseeinrichtung 11 gebildet. Von der Energiespeichergehäuseeinrichtung 11 ist exemplarisch nur eine einzelne Seitenwand dargestellt. Zwischen den drei Energiespeicherzellreihen 1, 2, 3 sind der erste 4 und der zweite 5 Temperierbereich gebildet. In diese beiden Temperierbereichen 4, 5 sind der erste 6 bzw. der zweite 7 Temperierkanal, im dargestellten Fertigungsschritt, noch im ungedehnten Zustand eingelegt.

In Figur 2 ist die in Figur 1 dargestellte Energiespeichervorrichtung nach einem weiteren Fertigungsschritt in der gleichen Ansicht dargestellt. In diesem weiteren Fertigungsschritt sind der erste 8 und der zweite 9 Temperierkanal im gedehnten Zustand dargestellt. Das Überführen der Temperierkanäle aus dem ungedehnten 6, 7 in deren gedehnten 8, 9 Zustand wird dabei durch das Aufbringen des Temperierkanalüberdrucks erreicht. Beim Aufbringen des Temperierkanalüberdrucks herrscht im Inneren des jeweiligen Temperierkanalschlauchs ein Überdruck gegenüber der diesen Temperierkanalschlauch unmittelbar umgebenden Umwelt. Aufgrund des flexiblen Werkstoffs dieser Temperierkanalschläuche dehnen sich diese unter Wirkung des Temperierkanalüberdrucks aus und schmiegt sich so an die Energiespeicherzellreihen 1, 2, 3 an, sodass jeweils eine große Kontaktfläche zwischen den Energiespeicherzellreihen 1, 2, 3 und den Temperierkanälen 8, 9 erreicht ist. Freibleibende Bereiche 10 in der Energiespeichergehäuseeinrichtung 11 sind solche Bereiche, welche in einem weiteren Fertigungsschritt mit Energiespeicherfüllmasse befüllt werden.

In Figur 3 ist ein vereinfachter Ablaufplan des erfinderischen Verfahrens zum Herstellen einer Energiespeichervorrichtung dargestellt.

Der erste Verfahrensschritt 101 umfasst das Anordnen der Vielzahl von Energiespeicherzellen in wenigstens zwei Energiespeicherzellreihen 1, 2 in der Energiespeichergehäuseeinrichtung 11. Der zweite Verfahrensschritt 102 umfasst das Einbringen des flexiblen Temperierkanalschlauchs in den wenigstens einen Temperierbereich 4, zwischen den wenigstens zwei Energiespeicherzellreihen. Der dritte Verfahrensschritt 103 umfasst das Einbringen des Temperierkanalüberdrucks in dem wenigstens einen Temperierkanalschlauch, so dass dieser aus seinem ungedehnten Zustand 6 in seinen gedehnten Zustand 8 überführt wird und so der wenigstens ein Temperierkanal mittels dieses Temperierkanalschlauchs ausgeformt.

Der vierte Verfahrensschritt 104 umfasst das Einbringen einer Energiespeicherfüllmasse in Bereich 10, welche in der Energiespeichergehäuseeinrichtung 11 freigebliebene sind, dabei können solche Bereich 11 nicht, teilweise oder vollständig mit der Energiespeicherfüllmasse befüllt werden.

Mit anderen Worten ausgedrückt, ist es aus dem Stand der Technik bekannt, die Kühlung zylindrischer Zellen eines Hochvoltspeichers mittels einer sogenannten Zwischenzellkühlung, mittels einer zwischen Energiespeicherzellen angeordneten Kühlschlange aus Aluminium, sogenannte Alu-Kühlschlange, und zusätzlich einer Fluidführung seitlich davon zu ermöglichen, wobei diese seitliche Fluidführung als Sammelbereich oder Sammelkanal zu verstehen ist. Weiter ist es bekannt, die Alu-Kühlschlange, beziehungsweise die Alu-Kühlschalgen, elektrisch isoliert mit einer Kunststoffbeschichtung zu den Energiespeicherzellen auszuführen. Die zylindrischen Zellen, welche in Reihen angeordnet sind, werden über ihre Mantelflächen an wenigstens eine benachbart angeordnete Alu-Kühlschlange geklebt, beziehungsweise stoffschlüssig mit dieser verbunden. Die einzelnen Alu-Kühlschlangen, welche in den Zwischenräumen zwischen den Energiespeicherzellen angeordnet und mit diesen verbunden sind, werden an ihren axialen Enden und damit untereinander über Schnittstellen zu einer Fluidführung (Vor- und Rücklauf) zusammen verbunden, dies stellt den oben erläuterten Sammelbereich dar. Weiter kann ein so mit einer Kühlung versehenes Modul (Alu-Kühlschlangen, Energiespeicherzellen) in weiteren Prozessschritten mit einem Schaum-Werkstoff oder einer anderen geeigneten Füllmasse strukturell vergossen und ausgeschäumt werden. Durch das stoffschlüssige Verbinden einer Vielzahl starrer Körper (Alu-Kühlschlangen, Energiespeicherzellen) können sich unvermeidbare Fertigungsabweichungen dieser zu einer relative großen Gesamtabweichung aufaddieren.

Demgegenüber schlägt die Erfindung eine Herstellverfahren vor, welches die Verwendung einer flexiblen Kühlschlange, welche nicht aus einem starren Werkstoff wie Aluminium besteht, vorsieht, so dass die Fluidführung durch einen flexiblen Kunststoff-Schlauch oder Hohlkörper, sogenannter Temperierkanalschlauch, ermöglicht ist. Dieser wenigstens eine Temperierkanalschlauch ist flexibel ausgelegt und bringt somit keine Strukturfunktion, wie das Positionieren von Energiespeicherzellen oder Erreichen eines bestimmten Mindestabstand zwischen zwei benachbarten Energiespeicherzellreichen, mit sich, sondern dieser Temperierkanalschlauch bringt nur die Dichtfunktion für die Medienführung, also die Führung eines Temperier- oder Kühlmediums im planmäßigen Betrieb der Energiespeichervorrichtung mit sich. Dazu ist es vorgeschlagen, die Energiespeicherzellen, welche insbesondere als kreiszylindrische Körper ausgebildet sind, zunächst in Energiespeicherzellreihen anzuordnen, danach wird der flexible Temperierkanalschlauch, welcher sich zu diesem Zeitpunkt noch in einem ungedehnten Zustand befindet, zwischen zwei benachbarten Energiespeicherzellreihen positioniert, dies wird so oft wiederholt, bis alle Bereiche die dazu vorgesehen sind mit einem solchen Temperierkanalschlauch versehen sind. Der wenigstens eine so positionierte Temperierkanalschlauch wird mit einem Medium befüllt und unter Wirkung des so entstehenden Temperierkanalüberdrucks dehnt sich der Temperierkanalschlauch aus und schmiegt sich so an die Mantelflächen der Energiespeicherzellen an.

In diesem gedehnten Zustand des wenigstens einen Temperierkanalschlauchs erfolgt dann der Verguss des Energiemoduls mit der Energiespeicherfüllmasse. Durch diesen Verguss werden vorzugsweise alle verbleibenden Zwischenräume aufgefüllt. Dabei ist die Energiespeicherfüllmasse derart beschaffen, dass diese eine adhäsive Verbindung zu dem wenigstens einen Temperierkanalschlauch herstellt. So bleibt nach dem Aushärten der Temperierkanal für die Fluidführung offen, auch wenn der Befülldruck beziehungsweise. Temperierkanalüberdruck absinkt. Eine mögliche Verbindung einzelner Temperierkanäle, sogenannte seitliche Fluidführung, kann ebenfalls als Kunststoffteil ausgeführt und mit vergossen werden. So kann in einer bevorzugten Ausführungsform die komplette Fluidführung aus wenigstens einem dünnen, leichten und billigem Kunststoffbauteil ausgeführt werden. Die Festigkeit des Temperierkanals wir dabei wenigstens im Wesentlichen von der Energiespeicherfüllmasse beigesteuert.

### Bezugszeichenliste:

| | |
|---|---|
| 1, 2, 3 | erste, zweite, dritte Energiespeicherzellreihe |
| 4, 5 | erster, zweiter Temperierbereich |
| 6, 7 | erster, zweiter Temperierkanalschlauch in ungedehntem Zustand |
| 8, 9 | erster, zweiter Temperierkanalschlauch in gedehntem Zustand |
| 10 | mit Energiespeicherfüllmasse zu befüllende Bereiche |
| 101 | erster Schritt |
| 102 | zweiter Schritt |
| 103 | dritter Schritt |
| 104 | vierter Schritt |

## Patentansprüche

1. Verfahren zum Herstellen einer Energiespeichervorrichtung mit einer Vielzahl von Energiespeicherzellen, welche in einer Energiespeichergehäuseinrichtung in aufgenommen sind, wobei so zwischen diesen wenigstens zwei Energiespeicherzellreihen ein Temperierbereich gebildet ist und
mit einer Energiespeichertemperiereinrichtung mit wenigstens einem Temperierkanalschlauch,
wobei ein solcher Temperierkanalschlauch in diesem Temperierbereich angeordnet ist,
mit den Schritten:
- Anordnen der Vielzahl von Energiespeicherzellen in wenigstens zwei Energiespeicherzellreihen in der Energiespeichergehäuseeinrichtung,
- Einbringen eines flexiblen Temperierkanalschlauchs in diesen Temperierbereich,
- Einbringen eines Temperierkanalüberdrucks in diesem Temperierkanalschlauch zum Ausformen des Temperierkanals,
- Einbringen einer Energiespeicherfüllmasse in die Energiespeichergehäuseeinrichtung und damit wenigstens teilweise oder vollständig Umgeben des Temperierkanalschlauchs mit der Energiespeicherfüllmasse.

2. Verfahren zum Herstellen einer Energiespeichervorrichtung nach Anspruch 1,
**dadurch gekennzeichnet, dass**
der Temperierkanalschlauch aus dem Temperierbereich hinausführt in einen Bereich, welcher innerhalb der Energiespeichereinrichtung liegt und in welchem dieser nur einseitig oder nicht von wenigstens einer Energiespeichereinrichtung benachbart ist.

3. Verfahren zum Herstellen einer Energiespeichervorrichtung nach einem der vorhergehenden Ansprüche, **dadurch gekennzeichnet, dass**
der Temperierkanal, wenigstens im Temperierbereich, bei aufgebrachten Temperierkanalüberdrucks um mehr als 1% gegenüber einem Zustand aufgedehnt ist, in welchem dieser Temperierkanalüberdruck nicht aufgebracht ist.

4. Verfahren zum Herstellen einer Energiespeichervorrichtung nach einem der vorhergehenden Ansprüche, **dadurch gekennzeichnet, dass**
Energiespeicherfüllmassen mit dem Temperierkanal, wenigstens im Temperierbereich und wenigstens abschnittsweise eine stoffschlüssige Verbindung ausbildet.

5. Verfahren zum Herstellen einer Energiespeichervorrichtung nach einem der vorhergehenden Ansprüche, **dadurch gekennzeichnet, dass**
der Temperierkanal nach dem Aufbringen des Temperierkanalüberdrucks wenigstens eine Energiespeicherzelle flächig kontaktiert.

6. Energiespeichervorrichtung für ein Kraftfahrzeug, wobei die Energiespeichervorrichtung nach einem Verfahren gemäß einem der vorhergehenden Ansprüche hergestellt ist.

## Claims

1. Method for producing an energy storage device with a plurality of energy storage cells, which are accommodated in an energy storage housing device, wherein a temperature control region is formed between at least two energy storage cell rows and
with an energy storage temperature control device with at least one temperature control channel hose,
wherein such a temperature control channel hose is arranged in this temperature control region,
with the steps:
• arranging the plurality of energy storage cells in at least two energy storage cell rows in the energy storage housing device,
• introducing a flexible temperature control channel hose into this temperature control region,
• introducing a temperature control channel overpressure into this temperature control channel hose for forming out the temperature control channel,
• introducing an energy storage filling mass into the energy storage housing device and thereby at least partially or completely surrounding the temperature control channel hose with the energy storage filling mass.

2. Method for producing an energy storage device according to claim 1, **characterized in that**
the temperature control channel hose leads out of the temperature control region into a region which lies within the energy storage device and in which it is only unilaterally or not adjacent to at least one energy storage device.

3. Method for producing an energy storage device according to one of the preceding claims, **characterized in that**
the temperature control channel, at least in the temperature control region, is expanded by more than 1% with applied temperature control channel overpressure compared to a state in which this temperature control channel overpressure is not applied.

4. Method for producing an energy storage device according to one of the preceding claims, **characterized in that**
energy storage filling mass forms a material-locking connection with the temperature control channel, at least in the temperature control region and at least in sections.

5. Method for producing an energy storage device according to one of the preceding claims, **characterized in that**
the temperature control channel contacts at least one energy storage cell over a surface area after the application of the temperature control channel overpressure.

6. Energy storage device for a motor vehicle, wherein the energy storage device is produced according to a method according to one of the preceding claims.

## Revendications

1. Procédé de fabrication d'un dispositif de stockage d'énergie comportant une pluralité de cellules de stockage d'énergie, lesquelles sont logées dans un dispositif de boîtier de stockage d'énergie, une région de températion étant ainsi formée entre au moins deux rangées de cellules de stockage d'énergie et
avec un dispositif de températion de stockage d'énergie comportant au moins un tuyau de canal de températion,
un tel tuyau de canal de températion étant disposé dans cette région de températion, avec les étapes :
• disposer la pluralité de cellules de stockage d'énergie en au moins deux rangées de cellules de stockage d'énergie dans le dispositif de boîtier de stockage d'énergie,
• introduire un tuyau de canal de températion flexible dans cette région de températion,
• introduire une surpression de canal de températion dans ce tuyau de canal de températion pour former le canal de températion,
• introduire une masse de remplissage de stockage d'énergie dans le dispositif de boîtier de stockage d'énergie et entourant ainsi au moins partiellement ou complètement le tuyau de canal de températion avec la masse de remplissage de stockage d'énergie.

2. Procédé de fabrication d'un dispositif de stockage d'énergie selon la revendication 1, **caractérisé en ce que**
le tuyau de canal de températion sort de la région de températion vers une région qui se trouve à l'intérieur du dispositif de stockage d'énergie et dans laquelle celui-ci n'est adjacent que d'un seul côté ou pas adjacent à au moins un dispositif de stockage d'énergie.

3. Procédé de fabrication d'un dispositif de stockage d'énergie selon l'une des revendications précédentes, **caractérisé en ce que**
le canal de températion, au moins dans la région de températion, est dilaté de plus de 1% avec la surpression de canal de températion appliquée par rapport à un état dans lequel cette surpression de canal de températion n'est pas appliquée.

4. Procédé de fabrication d'un dispositif de stockage d'énergie selon l'une des revendications précédentes, **caractérisé en ce que**
la masse de remplissage de stockage d'énergie forme avec le canal de températion, au moins dans la région de températion et au moins par sections une liaison par adhérence de matière.

5. Procédé de fabrication d'un dispositif de stockage d'énergie selon l'une des revendications précédentes, **caractérisé en ce que**
le canal de températion contacte de manière surfacique au moins une cellule de stockage d'énergie après l'application de la surpression de canal de températion.

6. Dispositif de stockage d'énergie pour un véhicule automobile, le dispositif de stockage d'énergie étant fabriqué selon un procédé selon l'une des revendications précédentes.
